# FASCICULE DE BREVET EUROPEEN

(11) **EP 2 476 947 B1**
(45) Date de publication et mention de la délivrance du brevet: **29.10.2014**
(21) Numéro de dépôt: 12150433.6
(22) Date de dépôt: 09.01.2012
(51) Int. Cl.: F21S 8/10, F21V 13/04, F21V 8/00, F21W 101/12, F21W 101/14, F21Y 101/02

(54) **Dispositif d'éclairage ou de signalisation à guide optique pour véhicule automobile**
Vorrichtung zur Beleuchtung oder Signalisierung mittels Lichtwellenleiter für Kraftfahrzeug
Lighting or signalling device with an optical guide for an automobile vehicle

(30) Priorité: 14.01.2011 FR 1150335
(43) Date de publication de la demande: 18.07.2012
(73) Titulaire: Valeo Vision, 93012 Bobigny (FR)
(72) Inventeur: Godbillon, Vincent, 75011 PARIS (FR); Mairet, Fabrice, 77590 BOIS LE ROI (FR); Sergent, Fabien, 78210 Saint Cyr l'Ecole (FR)
(74) Mandataire: Schaffner, Jean

(56) Documents cités:
- EP-A1- 1 775 511
- EP-A1- 1 903 358
- DE-A1- 10 311 317
- US-A1- 2010 014 309

## Description

La présente invention a pour objet un dispositif d'éclairage et/ou de signalisation pour véhicule automobile, comportant au moins un guide optique apte à produire une diffusion de la lumière sur au moins une partie de sa longueur. L'invention concerne aussi un véhicule comportant un tel dispositif d'éclairage ou de signalisation.

Dans le domaine de l'éclairage et de la signalisation de véhicules automobiles, il est de plus en plus fréquent d'utiliser des guides optiques. Un guide optique est, très schématiquement, un élément allongé de matière transparente, généralement sous forme d'un cylindre ou de nappe. A proximité de l'une des extrémités du guide, appelée face d'entrée du guide, est disposée une (ou plusieurs) source lumineuse, par exemple une source lumineuse de petite taille du type diode électroluminescente : les rayons lumineux émis par cette source se propagent par réflexion totale dans la longueur du guide en direction de son extrémité opposée, appelée face terminale du guide. Une partie des rayons lumineux se propageant dans le guide va en sortir par la face dite face avant du guide grâce à la présence d'éléments réfléchissants disposés sur la face dite face arrière du guide, opposée à la précédente. Ces éléments réfléchissants sont constitués par exemple de prismes. Le guide émet ainsi de la lumière sur toute sa longueur. Il présente l'avantage de pouvoir prendre des formes géométriques très variées, être rectiligne ou galbé, notamment selon un arc de cercle, et amener une surface éclairante même dans des zones peu accessibles d'un projecteur ou d'un feu du véhicule. Il participe ainsi fortement au style du projecteur ou du feu. Cependant, les guides de lumières existants sont perfectibles : en effet, il est souvent délicat d'assurer un niveau d'éclairement identique entre la première et la seconde extrémité du guide, tout particulièrement s'il a une longueur significative, le niveau d'éclairement ayant tendance à diminuer au fur et à mesure qu'on s'éloigne de la face d'entrée du guide. Par ailleurs, il est aussi délicat d'assurer un aspect homogène du guide quelque soit l'angle de vision que l'on a du guide, la lumière sortant du guide ayant une répartition angulaire souvent insuffisamment large. Or c'est un point important selon la disposition du guide et sa forme à l'intérieur du projecteur ou du feu : On a tendance à concevoir le guide de façon à ce qu'il éclaire principalement dans l'axe du véhicule afin de répondre aux normes photométriques. Or, il s'avère aussi important d'avoir un aspect allumé homogène et agréable visuellement également quand l'observateur s'écarte de l'axe longitudinal du véhicule. On peut aussi vouloir améliorer le rendement optique du guide, car il peut y avoir des fuites de lumière perdues, par la face arrière du guide notamment.

Il est déjà connu du brevet EP 1 443265 d'associer, à un guide de lumière, un réflecteur situé à l'arrière du guide de lumière, afin de limiter au mieux les fuites de lumière et d'améliorer ainsi le rendement optique du guide. La demande de brevet WO 02/40 917 divulgue un dispositif de signalisation de véhicule dans lequel une couche réfléchissante est disposée par adhérence contre une face de réflexion d'un guide optique.
Le document EP 1 903 358 montre également ce type de construction. Enfin, il est connu du document EP1775511 de disposer en arrière d'un guide de lumière un écran diffusant pour qu'une partie des rayons lumineux s'échappant par la face de réflexion du guide optique soit au moins partiellement renvoyée dans le guide.

Ces guides sont généralement utilisés pour réaliser une fonction lumineuse selon une direction globale de faisceau lumineux sortant du dispositif d'éclairage et/ ou de signalisation. Cependant, dans ce type de dispositif d'éclairage et/ou de signalisation, peu de rayons lumineux parviennent sur les côtés et le dispositif parait éteint.

Le but de l'invention est de fournir un dispositif d'éclairage et/ou de signalisation remédiant aux inconvénients mentionnés ci-dessus et améliorant les dispositifs d'éclairage et/ou de signalisation connus de l'art antérieur. En particulier, l'invention propose un dispositif d'éclairage et/ou de signalisation ayant une structure simple et peu coûteuse tout en permettant d'obtenir un aspect éclairé homogène du guide, tout particulièrement dans une large plage d'angles d'incidence de vision.

Selon l'invention, le dispositif d'éclairage et/ou de signalisation d'un véhicule automobile comporte au moins une source lumineuse émettant un faisceau lumineux et au moins un guide optique dans lequel se propage ledit faisceau lumineux, ledit guide optique comportant :
- une première face formant une face de sortie du faisceau lumineux,
- une seconde face formant une face de réflexion du faisceau lumineux, et
- un écran disposé en regard de la face de réflexion du guide de lumière. L'écran comprend un moyen d'orientation déviant des rayons s'échappant du guide au niveau de la face de réflexion, de sorte à les renvoyer au moins partiellement dans le guide.

Par guide optique, on entend dans la présente demande une pièce transparente ou translucide à l'intérieur de laquelle des rayons lumineux se propagent depuis une des extrémités du guide, appelée « face d'entrée » jusqu'à au moins une face de sortie. A proximité de l'une des extrémités du guide, appelée face d'entrée du guide, est disposée une (ou plusieurs) source lumineuse, par exemple une source lumineuse de petite taille du type diode électroluminescente. Les rayons lumineux émis par cette source se propagent par réflexion totale dans la longueur du guide en direction de son extrémité opposée, appelée face terminale du guide. Une partie des rayons lumineux se propageant dans le guide va en sortir par la face dite face avant du guide grâce à la présence d'éléments réfléchissants disposés sur la face dite face arrière du guide, opposée à la précédente. Ces éléments réfléchissants sont constitués par exemple de prismes. Le guide émet ainsi de la lumière sur toute sa longueur. Lors de la propagation dans le guide certains rayons sont réfléchis de nombreuses fois avant de sortir du guide. On a pu montrer que la présence de ce moyen d'orientation avait, de manière surprenante, un impact significatif sur l'aspect allumé du guide : il permet en fait de récupérer la lumière s'échappant du guide par sa face arrière, et de la renvoyer, au moins en partie, dans le guide. Cela a comme conséquence avantageuse d'augmenter le rendement optique du guide.

De préférence le moyen d'orientation comprend des motifs réfléchissants catadioptriques. Les motifs catadioptriques permettant d'optimiser l'orientation des rayons lumineux pour qu'ils retournent dans le guide optique.

De préférence, le moyen d'orientation des rayons lumineux est agencé de sorte à renvoyer les rayons lumineux se propageant dans une première direction particulière déterminée, dans une deuxième direction particulière déterminée. On a aussi observé que l'invention autorisait l'utilisation de ce type de guide de lumière linéaire pour réaliser une fonction de type indicateur de position latéral (une fonction dite « side marker » en anglais).

De préférence, le moyen d'orientation comprend des motifs réfléchissants. De tels motifs constituent une solution simple pour réaliser le moyen d'orientation.

Éventuellement, les motifs réfléchissants sont obtenus par dépôt d'une couche de matériau réfléchissant sur des motifs.

Selon un mode préférentiel de réalisation, l'écran est réalisé dans une pièce transparente, comportant une première face en vis-à-vis du guide de lumière et une deuxième face opposée à cette première face. Cette deuxième face comprenant les motifs réfléchissants. La réflexion par ces derniers a ainsi lieu dans la matière de l'écran. Les motifs réfléchissants peuvent ainsi être constitués par une partie du dioptre formant la deuxième face de l'écran, en étant agencés de manière à ce que la réflexion vers le guide de lumière se face par réflexion interne sur ce dioptre. Ceci permet de s'affranchir d'un revêtement spécifique. L'écran selon l'invention peut ainsi être monobloc, les motifs étant réalisés sur sa deuxième face, à savoir celle opposée à la face destinée à être en vis-à-vis de la face d'entrée du guide de lumière. Les motifs peuvent être réalisés par moulage, pressage ou par usinage.

Avantageusement, le moyen d'orientation comprend des motifs réfléchissants catadioptriques. Les motifs catadioptriques permettent d'optimiser l'orientation des rayons lumineux pour qu'ils retournent dans le guide optique.

Le moyen d'orientation peut comprendre une répétition spatiale des motifs réfléchissants.

De préférence, le moyen d'orientation comprend des prismes. Ceci permet de réorienter les rayons lumineux dans une direction particulière. Par rapport à un écran diffusant un rayon renvoyé n'est pas diffusé. Par exemple les rayons s'échappant de la face arrière du guide perpendiculairement à sa surface générale de base, c'est-à-dire la surface passant par la base des prismes de la face arrière du guide, sont réorientés dans une direction particulière, notamment dans une direction constituant l'axe principal d'une fonction optique secondaire du dispositif d'éclairage et/ou de signalisation.

Avantageusement, le moyen d'orientation présente une succession de motifs catadioptriques formés sur la face avant de l'écran en regard du guide optique, les motifs étant métallisés.

Une face de l'écran et/ou la seconde face du guide et/ou la première face du guide peut comprendre un grainage, ce grainage permettant de diffuser des rayons renvoyés par le moyen d'orientation. Ainsi, il est possible de récupérer la lumière s'échappant du guide par sa face arrière, et de la renvoyer, au moins en partie, dans le guide avec une largeur angulaire élevée, de part le caractère diffusant du grainage. En conséquence, le guide optique émet par sa face avant une lumière plus étalée et de direction plus anisotrope: d'où qu'on l'observe. Le guide garde un aspect allumé assez homogène.

De préférence, le dispositif d'éclairage et/ou de signalisation est destiné à assurer une première fonction optique présentant un premier axe optique principal et à assurer une deuxième fonction optique présentant un deuxième axe optique principal et au moins une portion du moyen d'orientation est agencée pour orienter les rayons principalement selon le deuxième axe optique principal.

De préférence, le dispositif d'éclairage et/ou de signalisation comprend plusieurs guides optiques, notamment disposés au moins sensiblement parallèlement les uns aux autres, chaque guide comprenant une seconde face formant une face de réflexion d'un faisceau lumineux et un écran de préférence commun s'étend en regard des secondes faces des guides. Cet écran peut comporter entre les guides des motifs de style ou destinés par exemple à réaliser une fonction optique supplémentaire.

La face de réflexion peut être munie de prismes réfléchissants. De façon connue, en effet, la présence de ces prismes permet de faire sortir du guide, de façon contrôlée, une fraction de rayons lumineux sur sa longueur: chaque rayon se propageant dans le guide et frappant la zone active optiquement de ces prismes est redirigée hors du guide par sa face avant.

Alternativement ou cumulativement à la présence de prismes, la face de réflexion du guide peut être munie de foyers de réflexion de la lumière, notamment sous forme de creux par rapport à la surface substantiellement lisse par ailleurs de ladite face. Ces foyers de réflexion peuvent être obtenus par altération superficielle de la face de réflexion, et peuvent être de conception similaire à celle décrite dans le brevet EP 1 434 000 pour des guides de lumière de type plus surfacique que linéaire comme dans le cas présent.

Alternativement ou cumulativement à la présence de prismes, la face de réflexion du guide peut être munie d'un grainage.

La face de réflexion du guide comporte donc des moyens réfléchissants, qui sont en fait des moyens de découplage, et qui sont indépendants de l'écran, ces moyens de découplage étant indispensables pour obtenir la photométrie voulue.

L'écran peut être fixé à ou fait partie intégrante d'un masque du dispositif. Un masque (« bezel » en anglais) se comprend comme une pièce de style permettant d'assurer une continuité de surface entre, par exemple, un réflecteur et le bord d'un boîtier ou de la glace du projecteur ou du feu. Le masque peut avoir différents aspects, notamment mat ou au contraire brillant et se rapprochant de l'aspect d'un réflecteur. Intégrer l'écran selon l'invention à un masque associé à un réflecteur d'une fonction principale d'éclairage ou de signalisation est intéressant techniquement : on n'ajoute pas de pièce supplémentaire, on gagne en simplicité de montage et en tolérance de positionnement entre les composants du feu ou du projecteur dans leur ensemble.

L'écran peut faire partie intégrante d'un masque du dispositif, par modification locale des propriétés/de l'aspect superficiels dudit masque, notamment par érosion superficielle, ajout ou suppression d'un revêtement. Il peut par exemple s'agir d'un masque aluminé, dont une zone est dépourvue de couche d'aluminium.

Avantageusement, le dispositif d'éclairage et/ou de signalisation comprend un boîtier fermé par une glace de fermeture dans lequel sont disposés ledit au moins un guide optique, ladite au moins une source lumineuse et ledit écran, ledit moyen d'orientation présentant une succession de motifs catadioptriques formés sur la face avant de l'écran en regard du guide optique, les motifs étant métallisés, et ledit écran étant formé directement par la surface interne du boîtier du dispositif d'éclairage et/ou de signalisation, par exemple par pressage, usinage ou lors du moulage du boîtier.

L'écran est avantageusement disposé à une distance d'au moins 0.5 mm de la face de réflexion du guide, notamment à une distance comprise entre 1 et 15 mm, en particulier à une distance comprise entre 2 et 10 mm. Il est avantageux que l'écran ne soit pas trop proche voire en contact direct avec le guide.

L'écran reçoit ainsi des rayons lumineux sortant du guide par la face de réflexion du guide et les redirige vers ladite face de réflexion.

L'invention s'efforce de « récupérer » des rayons lumineux qui sinon seraient perdus, sans modifier sensiblement et sans dégrader, les performances photométriques des autres rayons lumineux se propageant dans le guide.

L'invention se rapporte encore à un véhicule automobile comprenant un dispositif d'éclairage et/ou de signalisation défini précédemment.

L'invention a également pour objet un écran tel que précédemment décrit.

L'invention est décrite en détails à l'aide de plusieurs exemples de réalisation non limitatifs, illustrés par les figures suivantes :
La figure 1 est une vue de face d'un mode de réalisation d'un dispositif de signalisation de véhicule automobile selon l'invention,
La figure 2 est une vue de dessus de ce mode de réalisation de dispositif de signalisation de véhicule automobile selon l'invention,
La figure 3 représente une vue en perspective d'un guide optique selon l'invention destiné à être incorporé dans un feu de véhicule automobile.
La figure 4 représente une section transversale du guide selon la figure 3,
La figure 5 représente une section longitudinale du guide,
La figure 6 représente une section transversale du mode de réalisation de dispositif de signalisation de véhicule automobile selon l'invention,
Les figures 7 à 9 sont des vues schématiques du guide, de l'écran et de rayons lumineux permettant d'illustrer le cheminement des rayons lumineux,
Les figures 10 à 13 représentent différentes variantes de réalisation du moyen d'orientation des rayons lumineux,
Les figures 14 à 16 représentent encore d'autres variantes de réalisation du moyen d'orientation des rayons lumineux,
La figure 17 représente le principe de fonctionnement de l'invention.

Toutes ces figures sont très schématiques et, afin d'en faciliter la lecture, ne respectent pas nécessairement l'échelle.

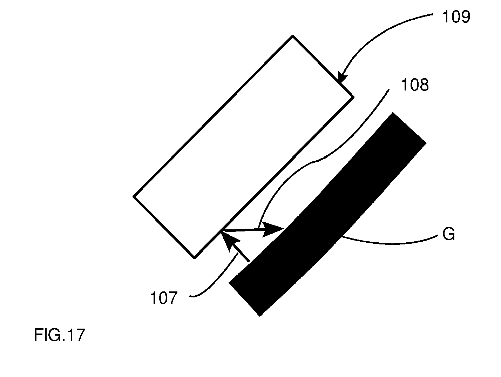

Tel que représenté à la figure 17, selon l'invention le moyen d'orientation 109 des rayons lumineux est agencé de sorte à renvoyer un rayon se propageant dans une première direction déterminée 107 depuis le guide, dans une deuxième direction déterminée 108 vers le guide. A cette fin, le moyen d'orientation peut comprendre des éléments réfléchissants.

Les fonctions optiques peuvent être des fonctions de signalisation ou des fonctions d'éclairage de la route.

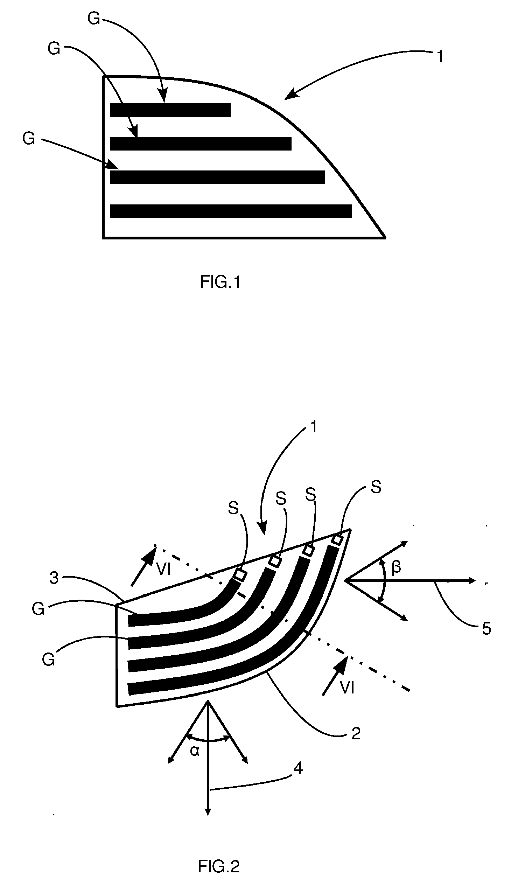

Un mode de réalisation d'un dispositif 1 d'éclairage et/ou de signalisation selon l'invention est décrit ci-après en référence aux figures 1, 2 et 6. Le dispositif comprend principalement un boîtier 3 fermé par une glace de fermeture 2 et dans lequel sont disposés un ou plusieurs guides de lumière ou guide optique G associés à une ou plusieurs sources lumineuses S et associés à un ou plusieurs écrans ED.

Par exemple, le dispositif est destiné à assurer une première fonction optique présentant un premier axe optique principal 4 et à assurer une deuxième fonction optique présentant un deuxième axe optique principal 5. La première fonction optique impose une émission de lumière selon la direction principale 4 et un étalement de l'émission de lumière autour de cet axe, par exemple un étalement horizontal α de typiquement plus ou moins 20° pour une fonction optique de type signalisation lanterne. La deuxième fonction optique impose quant à l'une émission de lumière selon la deuxième direction principale 5 est un étalement de l'émission de lumière autour de cet axe, par exemple un étalement horizontal β de typiquement plus ou moins 45° ou une fonction optique de type indicateur de position latéral (side marker). L'angle séparant les première et deuxième directions principales peut atteindre 90°. Ces fonctions optiques sont assurées par les rayons lumineux s'échappant des faces de sortie des guides optiques.

Alternativement, le dispositif est destiné à assurer une fonction optique requérant, d'une part, une émission de lumière selon une direction principale 4 selon l'axe longitudinal du véhicule et présentant, d'autre part, un étalement de l'émission de lumière s'étendant depuis cet axe 4, jusqu'à un deuxième axe optique 5. Ceci permettant de voir la fonction optique pour un observateur situé sur le côté du véhicule.

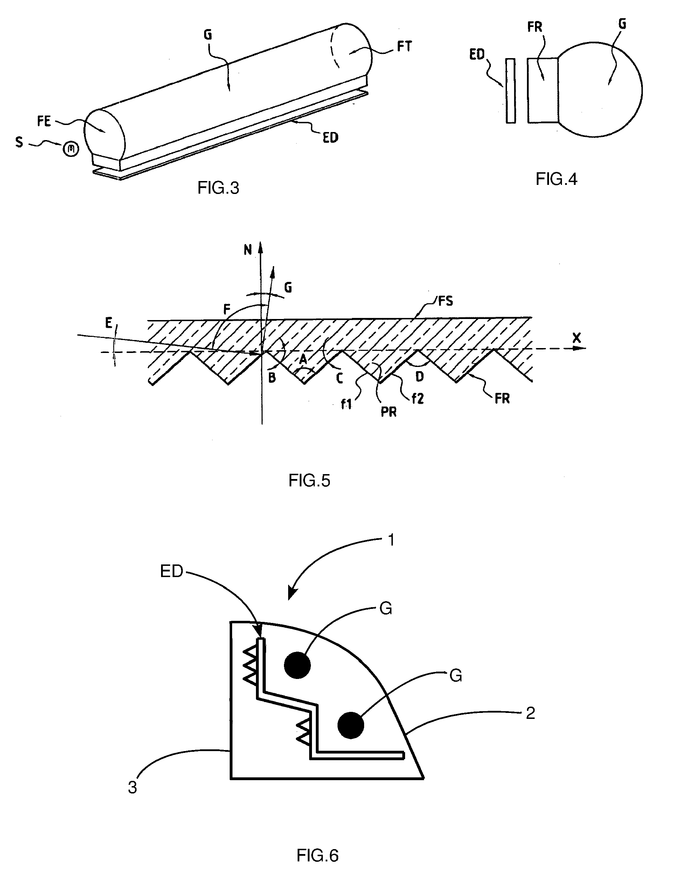

Les figures 3 et 4 montrent des vues en perspective et en coupe d'un guide optique G destiné à propager un faisceau lumineux émis par une source lumineuse S. Le guide optique, dans cet exemple, est rectiligne. Les sources sont de préférence placées à l'extrémité des guides sur le retour d'aile dans le cas d'un dispositif à retour d'aile. Les sources sont de préférence masquées grâce à un cache opaque de sorte à ne pas être visibles de l'extérieur.

Il est bien entendu que le guide optique peut avoir d'autres formes comme, par exemple, comporter des courbures, une ou plusieurs portions d'arc de cercle, etc. L'invention s'applique également de la même façon à ces guides courbes.

Dans ce mode de réalisation, le guide optique G a une section circulaire; il est bien entendu qu'il peut aussi, dans d'autres modes de réalisation, avoir une section elliptique, carrée, ovale etc.

Dans ce mode de réalisation, le guide optique G est à base de polymère transparent en polycarbonate (ou polymétacrylate de méthyle PMMA), de préférence de qualité cristal.

Ce guide optique présente une face dite d'entrée FE à l'une de ses extrémités, au regard de laquelle est disposée une diode électroluminescente S, et une face terminale FT, qui constitue l'extrémité opposée à la précédente, et qui est dépourvue de source lumineuse. Optionnellement, il est possible de prévoir une seconde source lumineuse à chacune des extrémités du guide. Le guide comporte par ailleurs deux faces principales orientées selon sa longueur:
- une première face FS constituant une face de sortie des rayons lumineux propagés dans le guide optique G; cette face de sortie FS peut être lisse et continue, ou bien comporter des stries,
- une deuxième face FR, opposée à la première face FS, constituant une face de réflexion du guide optique G, qui est donc munie d'éléments réfléchissants.

Selon une première variante, comme représenté en figure 3, il s'agit d'une succession de prismes PR. Ces prismes PR sont placés côte à côte et assurent une réflexion des rayons lumineux ayant un angle d'incidence non nul avec l'axe X longitudinal au guide optique G. Chaque prisme a une forme sensiblement triangulaire; chaque prisme comporte une base, une facette f1 et une facette f2, planes et non parallèles et un sommet A. Elles sont ici symétriques par rapport à la normale N à l'axe X du guide optique, c'est-à-dire qu'elles ont des dimensions et des angles B et C identiques, de part et d'autre de leur bissectrice. Elles peuvent aussi être asymétriques, c'est-à-dire qu'elles ont des dimensions et/ou des angles B et C différents. On dit alors que le guide optique est à prismes dissymétriques. On trouvera des exemples de prismes non symétriques notamment dans la demande de brevet européen EP 05291258.1 déposée le 10 juin 2005, dont le numéro de publication est EP 1 605 201.

Selon une seconde variante (éventuellement cumulative avec la première), les éléments réfléchissants sont sous forme de picots réfléchissants : des creux répartis régulièrement à la surface de la face FR, notamment lors du moulage de la pièce constituant le guide G. Pour leur dimensionnement et leur répartition, on peut notamment se reporter à la description des foyers réfléchissants superficiels décrits dans le brevet EP 1 434 000.

On associe selon l'invention à ce guide un écran ED. Cet écran est disposé en regard de la face FR du guide. Il peut être substantiellement plan, notamment localement. Selon la première variante, les crêtes des prismes PR de la face de réflexion FR passent par un plan parallèle au plan de l'écran. De préférence, comme illustré ici, les dimensions de l'écran sont suffisamment importantes et la distance entre guide et écran est choisie telle que tout ou l'essentiel des rayons s'échappant par la face de réflexion du guide sont collectés par l'écran. La distance entre l'écran et le plan passant par les crêtes des prismes du guide est ici choisie d'environ 1 mm. Cette distance peut légèrement varier sur la longueur du guide sans perdre de manière significative l'avantage procuré par l'invention. Il est seulement préféré d'éviter un contact direct entre le guide et l'écran. Comme représentée à la figure 6, un écran ED peut être commun à plusieurs guides optiques, notamment l'écran peut s'étendre entre des guides optiques.

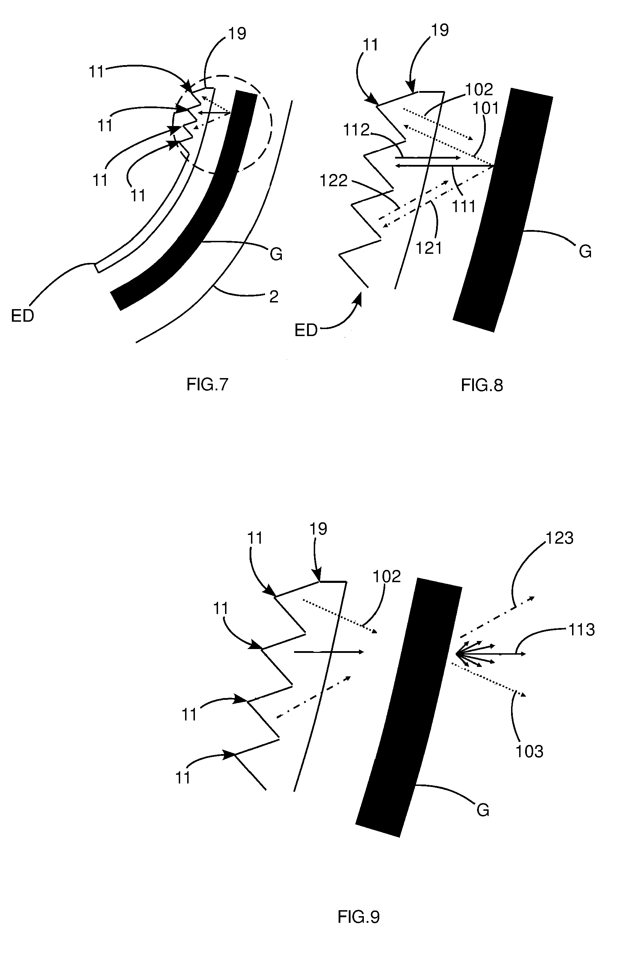

L'écran présente, comme représenté aux figures 7 à 9, un moyen d'orientation. Ce moyen d'orientation permet de dévier des rayons du faisceau lumineux s'étant échappés du guide au niveau de la face de réflexion de sorte à les renvoyer le plus possible dans le guide. Ceci permet d'améliorer le rendement optique du dispositif. Dans le cas où un écran ED est commun à plusieurs guides optiques, les moyens d'orientation peuvent néanmoins seulement être prévus en regard des faces de réflexion des guides.

Ces rayons sont ensuite renvoyés dans le guide en traversant à nouveau la face de réflexion du guide. Ces rayons, une fois rentrés dans le guide vont soit poursuivre leur chemin de propagation dans le guide, soit sortir par la face de sortie FS en s'ajoutant aux autres rayons sortants. Globalement, l'ensemble des rayons sortant par la face de sortie va donc être d'intensité plus forte.

Le moyen d'orientation 19 comprend par exemple des motifs réfléchissants 11, notamment des motifs catadioptriques. Ces motifs sont par exemple formés sur l'écran réalisé en matériau transparent aux rayonnements visibles. Les motifs sont formés sur la face arrière de l'écran. Les rayons lumineux traversent donc l'écran avant d'être renvoyés par les motifs. Ces motifs sont par exemple répétés spatialement sur des surfaces de l'écran en regard des faces réfléchissantes des guides optiques.

Selon une première variante, la face de sortie FS du guide optique est lisse. Selon une seconde variante non représentée, elle a un profil strié, comme par exemple écrit dans la demande de brevet européen précitée. Ces stries permettant de modifier l'orientation, de « redresser » les rayons lumineux en sortie du guide optique, c'est-à-dire de les faire sortir du guide optique avec un angle négatif par rapport à la normale N à l'axe X du guide.

Ces stries peuvent être de différentes formes, par exemple, en forme de prismes ou bien de dômes ou bien une combinaison de prismes et de dômes.

Quand on choisit la variante où la face de sortie est munie de stries, chaque strie de la face de sortie FS est de préférence située en regard d'un prisme PR (ou autre élément réfléchissant) de la face de réflexion FR.

Les figures 7 à 9 détaillent le cheminement de quelques rayons lumineux dans le dispositif pour clarifier le mode de fonctionnement du guide en association avec l'écran. Trois rayons lumineux 101, 111 et 121 s'échappent du guide au niveau de la face de réflexion du guide du fait d'imperfection de cette face, notamment d'imperfections de raccordement entre les facettes des prismes. Les différents rayons pénètrent dans l'écran et sont réfléchis par les motifs catadioptriques 11 du moyen d'orientation. Les rayons réfléchis sont respectivement référencés 102, 112 et 122 et sont réfléchis dans des directions parallèles ou sensiblement parallèles à celles des rayons 101, 111 et 121. Les rayons repartent donc dans le guide optique et le traversent pour en ressortir par la face de sortie. Les rayons réfractés par le guide sont respectivement référencés 103, 113 et 123. Ces rayons peuvent être déviés par les prismes de la face de réflexion. Dans cette variante de réalisation, le moyen d'orientation permet donc de dévier les rayons lumineux de manière à ce qu'ils repartent de l'écran selon la direction dans laquelle ils sont venus ou sensiblement selon cette direction. On remarque que du fait de la taille des motifs catadioptriques les rayons 101 et 102, 111 et 112, 121 et 122 sont parallèles mais non confondus, intervalle des distances les séparant et en fonction de la taille des motifs catadioptriques.

Bien sûr, on a décrit une vision schématique du chemin des rayons lumineux.

Les rayons sortants de la face FS du guide sont ainsi l'addition des rayons sortant directement du guide et de ceux qui ont été renvoyés dans le guide par l'écran. Cette addition conduit à des angles de sortie des rayons émis par la face FS d'amplitude angulaire significativement plus large. Le guide de lumière préserve son aspect allumé même à angle d'incidence élevé par rapport à la normale au guide G. La fonction remplie par le guide, notamment la fonction de signalisation du type lanterne, s'en trouve mieux remplie, et l'esthétique du guide à l'état allumé est améliorée.

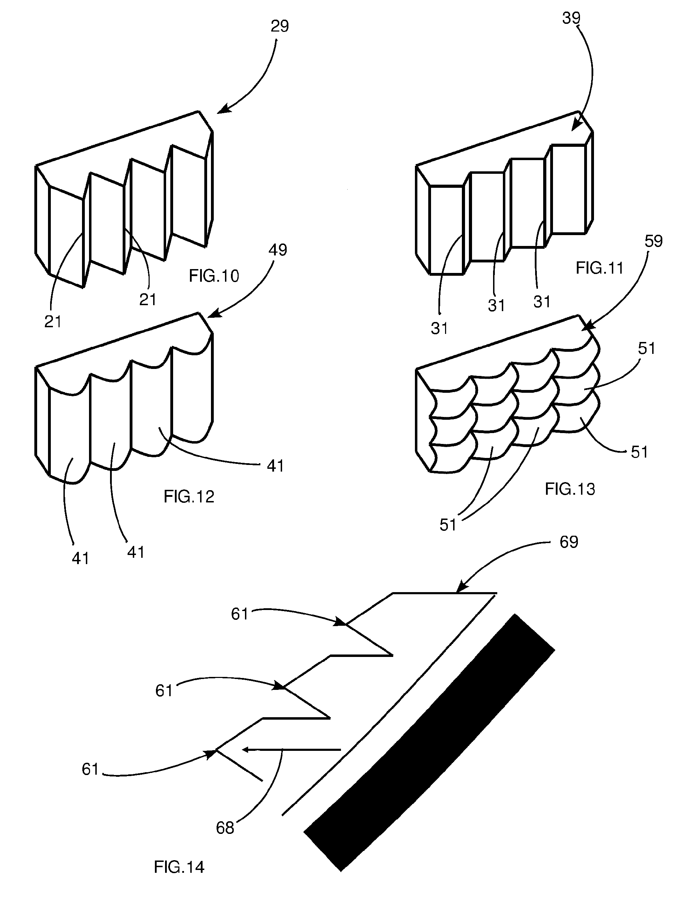

Dans une deuxième variante de dispositif d'éclairage et/ou de signalisation, le moyen d'orientation 29 représenté à la figure 10 a une structure différente de la première variante des figures 7 à 9. Il présente une succession de stries prismatiques 21 symétriques sur la face arrière de l'écran.

Dans une troisième variante de dispositif d'éclairage et/ou de signalisation, le moyen d'orientation 39 représenté à la figure 11 a une structure différente. Il présente une succession de stries prismatiques 31 asymétriques sur la face arrière de l'écran. Cette structure permet de privilégier une direction définie par l'asymétrie des stries.

Dans une quatrième variante de dispositif d'éclairage et/ou de signalisation, le moyen d'orientation 49 représenté à la figure 12 a une structure différente. Il présente une succession de stries cylindriques 41 sur la face arrière de l'écran.

Dans une cinquième variante de dispositif d'éclairage et/ou de signalisation, le moyen d'orientation 59 représenté à la figure 13 a une structure différente. Il présente une répétition spatiale de motifs toriques 51 sur la face arrière de l'écran.

Dans une sixième variante de dispositif d'éclairage et/ou de signalisation, le moyen d'orientation 69 représenté à la figure 14 a une structure différente. Il présente, sur la face arrière de l'écran, une succession de motifs catadioptriques 61 formés par des trièdres dont les médiatrices s'étendent selon un axe 68 non parallèle à la normale à la surface de base de la face de réflexion du guide optique. Cette structure permet de privilégier une direction définie par l'axe 68, c'est-à-dire de privilégier le renvoi des rayons selon cette direction. En effet, le rendement des motifs catadioptriques décroît au fur et à mesure qu'on s'éloigne de cette direction. La direction définie par l'axe 68 est préférentiellement confondue avec la direction de l'axe principal de la deuxième fonction optique.

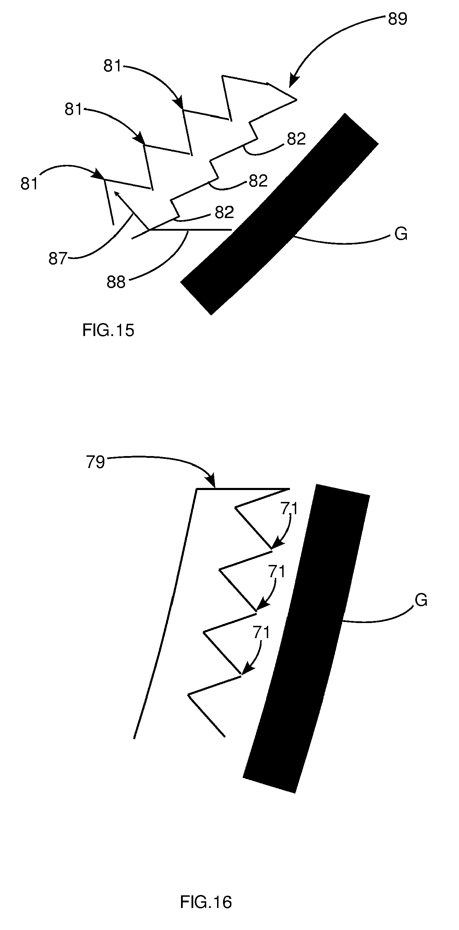

Dans une septième variante de dispositif d'éclairage et/ou de signalisation, le moyen d'orientation 89 représenté à la figure 15 a une structure différente. Il présente, sur la face arrière de l'écran, une succession de motifs catadioptriques 81 associés à des prismes 82 formés sur la face avant de l'écran. Cette structure permet de privilégier une direction définie par l'axe 88 non parallèle à la normale à la surface de base de la face de réflexion du guide optique, c'est-à-dire de privilégier le renvoi des rayons selon cette direction. En effet, le rendement des motifs catadioptriques décroît au fur et à mesure qu'on s'éloigne de la direction 87 (définie comme la médiatrice des trièdres formant les motifs catadioptriques), cette direction 87 étant déviée selon l'axe 88 par l'action des prismes 82. La direction définie par l'axe 88 est préférentiellement confondue avec la direction de l'axe principal de la deuxième fonction optique.

Selon l'invention, quand le guide est suffisamment galbé, la direction moyenne des rayons s'échappant du guide peut être quasiment perpendiculaire à la direction longitudinale du véhicule, en particulier sur la partie du guide revenant sur le côté du véhicule. Dans ce cas, un catadioptre dont la médiatrice est orientée environ perpendiculairement à la face générale du guide, permet de renvoyer dans le guide les rayons avec une direction moyenne également quasiment perpendiculaire à la direction longitudinale du véhicule. Ceci permet de voir le guide allumé même pour un observateur situé sur le côté du véhicule. En revanche, si le guide n'est pas suffisamment galbé, un catadioptre agencé ainsi renverra les rayons avec une direction moyenne faisant un angle insuffisant avec l'axe longitudinal du véhicule. Un observateur situé sur le côté du véhicule verra le guide éteint. Par une direction moyenne de rayons, on entend la direction correspondant à l'axe d'un cône dans lequel se propagent un ensemble de rayons. Cette direction moyenne est encore appelée direction globale.

Les catadioptres de l'écran de la sixième variante et les prismes de l'écran de la septième variante de l'invention, permettent de donner une direction moyenne des rayons réorientés dans le guide différente de la direction moyenne des rayons s'échappant du guide. On peut ainsi agencer ces catadioptres et ses prismes de manière à ce que pour une direction moyenne donnée des rayons s'échappant, les rayons soient renvoyés selon une direction moyenne environ perpendiculaire avec l'axe longitudinal du véhicule. Ainsi, le guide optique est visible pour un observateur situé sur le côté du véhicule, quand bien même le guide serait peu galbé.

Dans une huitième variante de dispositif d'éclairage et/ou de signalisation, le moyen d'orientation 79 représenté à la figure 16 a une structure différente. Il présente une succession de motifs catadioptriques 71 formés sur la face avant de l'écran, c'est-à-dire sur la face de l'écran en regard du guide optique. Une métallisation des motifs est donc nécessaire. Ceci n'est pas gênant car, dans de nombreuses applications, cet écran peut être formé dans un masque formant réflecteur et nécessitant une métallisation sur tout ou partie de sa surface.

Par ailleurs, cet écran peut être formé directement par la surface interne du boîtier du dispositif d'éclairage et/ou de signalisation, par exemple par pressage, usinage ou lors du moulage du boîtier.

Dans un mode de réalisation, non représenté sur les figures, par mesure de simplification, le dispositif d'éclairage ou de signalisation de l'invention comporte au moins deux sources lumineuses placées chacune à une extrémité du guide optique. Le guide optique peut ainsi propager des rayons lumineux à partir des deux extrémités du guide optique, ce qui permet d'augmenter la longueur du guide optique.

Dans un autre mode de réalisation de l'invention, le dispositif d'éclairage ou de signalisation comporte plusieurs guides optiques, notamment placés au moins sensiblement parallèlement les uns aux autres ou placés de façon à avoir au moins une intersection commune. Dans ce dernier cas, une source lumineuse peut être placée à ce point d'intersection de façon à émettre des faisceaux lumineux dans chacun des guides optiques.

De préférence, dans les différents modes et dans les différentes variantes de réalisation du dispositif, une face de l'écran et/ou la seconde face du guide et/ou la première face du guide comprend un grainage, ce grainage permettant de diffuser des rayons renvoyés par le moyen d'orientation. Ainsi, les rayons lumineux sont renvoyés de façon diffusante, notamment selon une répartition ou distribution lambertienne. Du fait de la répartition angulaire plus large, plus étalée, le dispositif, en particulier les guides ont un aspect plus homogène quelque soit l'angle de vision. Cet effet de diffusion est notamment représenté à la figure 9 par les rayons 113. Il permet notamment le remplissage des grilles photométriques règlementaires autour des axes principaux des fonctions optiques.

Dans différentes variantes de réalisation, on remarque que le renvoi des rayons lumineux est privilégié selon une certaine direction particulière. Dans le cas où le dispositif d'éclairage et/ou de signalisation assure une seule fonction optique, il est intéressant d'éloigner cette direction particulière de l'axe principal de la fonction optique pour que cette fonction optique soit visible également sur le coté du véhicule. Dans le cas où le dispositif d'éclairage et/ou de signalisation assure deux fonctions optiques, il est intéressant de faire coïncider cette direction particulière et l'axe principal de la fonction optique qui doit être privilégiée. Par exemple, dans le cas où le dispositif d'éclairage et/ou de signalisation assure une fonction lanterne et une fonction optique d'indicateur de position latéral (side marker) dont les première et deuxième directions principales atteint 90° et dans le cas où le galbe des guides de lumière est peu prononcé de sorte que les guides de lumière sont peu visibles selon l'axe principal de la fonction optique d'indicateur de position latéral, il est intéressant de faire coïncider la direction particulière et la direction principale de la fonction optique d'indicateur de position latéral. De manière générale, dans le cas où le dispositif d'éclairage et/ou de signalisation assure deux fonctions optiques, il peut être prévu un écran présentant au moins un premier moyen d'orientation privilégiant le renvoi selon une première direction parallèle ou sensiblement parallèle à l'axe de la première fonction optique et au moins un deuxième moyen d'orientation privilégiant le renvoi selon une deuxième direction parallèles ou sensiblement parallèle à l'axe de la deuxième fonction optique. Dans ce cas, les étendues des premier et deuxième moyens d'orientation sont déterminées de sorte à permettre le remplissage des grilles photométriques réglementaires compte tenu de contraintes économiques ou de contraintes esthétiques.

## Revendications

1. Dispositif (1) d'éclairage et/ou de signalisation d'un véhicule automobile comportant au moins une source lumineuse (S) émettant un faisceau lumineux et au moins un guide optique (G) dans lequel se propage ledit faisceau lumineux, ledit guide optique comportant :
- une première face formant une face de sortie (FS) du faisceau lumineux,
- une seconde face formant une face de réflexion (FR) du faisceau lumineux, et
- un écran (ED) disposé en regard de la face de réflexion (FR) du guide de lumière (G), l'écran (ED) comprenant un moyen d'orientation (19 ; 29 ; 39 ; 49; 59; 69; 79; 89; 109) déviant des rayons s'échappant du guide au niveau de la face de réflexion, de sorte à les renvoyer au moins partiellement dans le guide,
**caractérisé en ce que** le moyen d'orientation comprend des motifs réfléchissants catadioptriques (11 ; 61 ; 71 ; 81).

2. Dispositif selon la revendication précédente, **caractérisé en ce que** le moyen d'orientation (109) des rayons lumineux est agencé de sorte à renvoyer un rayon se propageant dans une première direction déterminée (107), dans une deuxième direction déterminée (108).

3. Dispositif selon l'une des revendications précédentes, **caractérisé en ce que** le moyen d'orientation comprend une répétition spatiale des motifs réfléchissants.

4. Dispositif selon l'une des revendications précédentes, **caractérisé en ce que** les motifs réfléchissants sont obtenus par dépôt d'une couche de matériau réfléchissant sur des motifs.

5. Dispositif selon l'une des revendications précédentes, **caractérisé en ce que** le moyen d'orientation comprend des prismes (82).

6. Dispositif selon l'une des revendications précédentes, **caractérisé en ce que** le moyen d'orientation présente une succession de motifs catadioptriques (71) formés sur la face avant de l'écran en regard du guide optique (G), les motifs étant métallisés.

7. Dispositif selon l'une des revendications précédentes, **caractérisé en ce qu'**une face de l'écran et/ou la seconde face du guide et/ou la première face du guide comprend un grainage, ce grainage permettant de diffuser des rayons renvoyés par le moyen d'orientation.

8. Dispositif selon l'une des revendications précédentes, **caractérisé en ce qu'**il est destiné à assurer une première fonction optique présentant un premier axe optique principal (4) et à assurer une deuxième fonction optique présentant un deuxième axe optique principal (5) et **en ce qu'**au moins une portion du moyen d'orientation est agencée pour orienter les rayons principalement selon le deuxième axe optique principal.

9. Dispositif selon la revendication précédente, **caractérisé en ce que** la face de réflexion (FR) est munie de prismes réfléchissants (PR).

10. Dispositif selon l'une des revendications précédentes, **caractérisé en ce que** l'écran (ED) est fixé à ou fait partie intégrante d'un masque du dispositif.

11. Dispositif selon l'une des revendications précédentes, **caractérisé en ce que** l'écran (ED) fait partie intégrante d'un masque du dispositif, par modification locale des propriétés/de l'aspect superficiels dudit masque, notamment par érosion superficielle, ajout ou suppression d'un revêtement.

12. Dispositif selon l'une des revendications 1 à 9 **caractérisé en ce qu'**il comprend un boîtier (3) fermé par une glace de fermeture (2) dans lequel sont disposés ledit au moins un guide optique (G), ladite au moins une source lumineuse (S) et ledit écran (ED) et **en ce que** le moyen d'orientation présente une succession de motifs catadioptriques (71) formés sur la face avant de l'écran en regard du guide optique (G), les motifs étant métallisés, et ledit écran (ED) étant formé directement par la surface interne du boîtier du dispositif d'éclairage et/ou de signalisation.

13. Dispositif selon l'une des revendications précédentes, **caractérisé en ce que** l'écran (ED) est disposé à une distance d'au moins 0.5 mm de la face de réflexion (FR) du guide, notamment à une distance comprise entre 1 et 15 mm, en particulier une distance comprise entre 2 et 10 mm.

14. Dispositif selon l'une des revendications précédentes, **caractérisé en ce que** l'écran (ED) reçoit des rayons lumineux sortant du guide (G) par la face de réflexion (FR) du guide et les redirige vers ladite face de réflexion (FR).

## Patentansprüche

1. Beleuchtungs- und/oder Signalgebungsvorrichtung eines Kraftfahrzeugs mit wenigstens einer ein Lichtbündel emittierenden Lichtquelle (S) und wenigstens einem Lichtleiter (G), in dem sich das Lichtbündel ausbreitet, wobei der Lichtleiter umfasst:
- eine erste, eine Austrittsfläche (FS) des Lichtbündels bildende Seite,
- eine zweite, eine Reflexionsfläche (FR) des Lichtbündels bildende Seite, und
- eine Blende (ED), die der Reflexionsfläche (FR) des Lichtleiters (G) zugewandt angeordnet ist, wobei die Blende (ED) ein Ausrichtmittel (19; 29; 39; 49; 59; 69; 79; 89; 109) aufweist, das die aus dem Lichtleiter an der Reflexionsfläche entweichenden Lichtstrahlen so ablenkt, dass diese wenigstens zum Teil in den Lichtleiter zurückgestrahlt werden,
**dadurch gekennzeichnet, dass** das Ausrichtmittel katadioptrische Reflexionsmuster (11; 61; 71; 81) aufweist.

2. Vorrichtung nach dem vorhergehenden Anspruch,
**dadurch gekennzeichnet, dass** das Mittel (109) zum Ausrichten der Lichtstrahlen derart angeordnet ist, dass ein sich in einer ersten bestimmten Richtung (107) ausbreitender Lichtstrahl in eine zweite bestimmte Richtung (108) zurückgestrahlt wird.

3. Vorrichtung nach einem der vorhergehenden Ansprüche,
**dadurch gekennzeichnet, dass** das Ausrichtmittel eine räumliche Wiederholung der Reflexionsmuster aufweist.

4. Vorrichtung nach einem der vorhergehenden Ansprüche,
**dadurch gekennzeichnet, dass** die Reflexionsmuster durch Aufbringen einer Schicht aus reflektierendem Material auf den Mustern erzielt werden.

5. Vorrichtung nach einem der vorhergehenden Ansprüche,
**dadurch gekennzeichnet, dass** das Ausrichtmittel Prismen (82) umfasst.

6. Vorrichtung nach einem der vorhergehenden Ansprüche,
**dadurch gekennzeichnet, dass** das Ausrichtmittel eine Folge katadioptrischer Muster (71) aufweist, die auf der Vorderseite der Blende dem Lichtleiter (G) zugewandt ausgebildet sind, wobei die Muster mit einer Metallschicht überzogen sind.

7. Vorrichtung nach einem der vorhergehenden Ansprüche,
**dadurch gekennzeichnet, dass** eine Seite der Blende und/oder die zweite Seite des Lichtleiters und/oder die erste Seite des Lichtleiters eine Körnung aufweist, wobei die Körnung das Streuen von Lichtstrahlen ermöglicht, die durch das Ausrichtmittel zurückgestrahlt werden.

8. Vorrichtung nach einem der vorhergehenden Ansprüche,
**dadurch gekennzeichnet, dass** sie dazu bestimmt ist, eine erste optische Funktion auszuführen, die eine erste optische Hauptachse (4) aufweist, und eine zweite optische Funktion auszuführen, die eine zweite optische Hauptachse (5) aufweist, und dass wenigstens ein Teil des Ausrichtmittels dazu ausgebildet ist, die Lichtstrahlen hauptsächlich längs der zweiten optischen Hauptachse auszurichten.

9. Vorrichtung nach dem vorhergehenden Anspruch,
**dadurch gekennzeichnet, dass** die Reflexionsfläche (FR) mit Reflexionsprismen (PR) versehen ist.

10. Vorrichtung nach einem der vorhergehenden Ansprüche,
**dadurch gekennzeichnet, dass** die Blende (ED) an einer Abdeckung der Vorrichtung befestigt ist oder Teil derselben ist.

11. Vorrichtung nach einem der vorhergehenden Ansprüche,
**dadurch gekennzeichnet, dass** die Blende (ED) durch lokale Veränderung der Eigenschaften/des Aussehens der Oberfläche einer Abdeckung der Vorrichtung, insbesondere durch Oberflächenerosion, Hinzufügen oder Entfernen einer Beschichtung, Teil der Abdeckung ist.

12. Vorrichtung nach einem der Ansprüche 1 bis 9,
**dadurch gekennzeichnet, dass** sie ein durch eine Abschlussscheibe (2) geschlossenes Gehäuse (3) umfasst, in dem der wenigstens eine Lichtleiter (G), die wenigstens eine Lichtquelle (S) und die Blende (ED) angeordnet sind, und dass das Ausrichtmittel eine Folge katadioptischer Muster (71) aufweist, die auf der Vorderseite der Blende dem Lichtleiter (G) zugewandt ausgebildet sind, wobei die Muster mit einer Metallschicht überzogen sind und die Blende (ED) unmittelbar durch die Innenfläche des Gehäuses der Beleuchtungs- und/oder Signalgebungsvorrichtung gebildet ist.

13. Vorrichtung nach einem der vorhergehenden Ansprüche,
**dadurch gekennzeichnet, dass** die Blende (ED) in einem Abstand von wenigstens 0,5 mm zur Reflexionsfläche (FR) des Lichtleiters angeordnet ist, insbesondere in einem Abstand zwischen 1 und 15 mm, vor allem in einem Abstand zwischen 2 und 10 mm.

14. Vorrichtung nach einem der vorhergehenden Ansprüche,
**dadurch gekennzeichnet, dass** die Blende (ED) Lichtstrahlen empfängt, die aus dem Lichtleiter (G) durch die Reflexionsfläche (FR) des Lichtleiters austreten, und diese zur Reflexionsfläche (FR) zurückleitet.

## Claims

1. Lighting and/or signalling device (1) of a motor vehicle, comprising at least one source of light (S) which emits a light beam, and at least one optical guide (G) in which the said light beam is propagated, the said optical guide comprising:
- a first surface which forms an output surface (FS) of the light beam;
- a second surface which forms a reflection surface (FR) of the light beam; and
- a screen (ED) which is arranged opposite the reflection surface (FR) of the light guide (G), the screen (ED) comprising a means (19; 29; 39; 49; 59; 69; 79; 89; 109) for orientation which deflects the rays which escape from the guide at the level of the reflection surface, such as to return them at least partially to the guide, **characterised in that** the means for orientation comprises catadioptric reflective patterns (11; 61; 71; 81).

2. Device according to the preceding claim, **characterised in that** the means (109) for orientation of the rays of light is designed such as to return a ray which is propagated in a first specific direction (107) to a second specific direction (108).

3. Device according to one of the preceding claims, **characterised in that** the means for orientation comprises spatial repetition of the reflective patterns.

4. Device according to one of the preceding claims, **characterised in that** the reflective patterns are obtained by depositing a layer of reflective material on patterns.

5. Device according to one of the preceding claims, **characterised in that** the means for orientation comprises prisms (82).

6. Device according to one of the preceding claims, **characterised in that** the means for orientation has a succession of catadioptric patterns (71) formed on the front surface of the screen opposite the optical guide (G), the patterns being metallised.

7. Device according to one of the preceding claims, **characterised in that** a surface of the screen and/or the second surface of the guide and/or the first surface of the guide comprise granulation, this granulation making it possible to diffuse rays returned by the means for orientation.

8. Device according to one of the preceding claims, **characterised in that** it is designed to ensure a first optical function with a first main optical axis (4), and to ensure a second optical function with a second main optical axis (5), and **in that** at least one portion of the means for orientation is designed to orient the rays mainly according to the second main optical axis.

9. Device according to the preceding claim, **characterised in that** the reflection surface (FR) is provided with reflective prisms (PR).

10. Device according to one of the preceding claims, **characterised in that** the screen (ED) is secured to, or forms an integral part of, a shield of the device.

11. Device according to one of the preceding claims, **characterised in that** the screen (ED) forms an integral part of a shield of the device by means of local modification of the properties / surface appearance of the said shield, in particular by surface erosion, addition or elimination of a coating.

12. Device according to one of claims 1 to 9, **characterised in that** it comprises a case (3) which is closed by closure glass (2), in which there are arranged the said at least one optical guide (G), the said at least one source of light (S) and the said screen (ED), and **in that** the means for orientation has a succession of catadioptric patterns (71) formed on the front surface of the screen opposite the optical guide (G), the patterns being metallised and the said screen (ED) being formed directly by the inner surface of the case of the lighting and/or signalling device.

13. Device according to one of the preceding claims, **characterised in that** the screen (ED) is arranged at a distance of at least 0.5 mm from the reflection surface (FR) of the guide, in particular at a distance of between 1 and 15 mm, and in particular at a distance of between 2 and 10 mm.

14. Device according to one of the preceding claims, **characterised in that** the screen (ED) receives rays of light which are emitted from the guide (G) via the reflection surface (FR) of the guide, and redirects them to the said reflection surface (FR).
